# EUROPEAN PATENT SPECIFICATION

(11) **EP 3 809 180 B1**
(45) Date of publication and mention of the grant of the patent: **24.11.2021**
(21) Application number: 20201294.4
(22) Date of filing: 12.10.2020
(51) Int. Cl.: G02B 6/44, G02B 6/38

(54) **PATCH PANEL AND DISTRIBUTION FRAME**
SCHALTTAFEL UND VERTEILERSCHRANK
PANNEAU DE REPARTITION ET ARMOIRE DE DISTRIBUTION

(30) Priority: 18.10.2019 CN 201910994962
(43) Date of publication of application: 21.04.2021
(73) Proprietor: Rosenberger Hochfrequenztechnik GmbH & Co. KG, 83413 Fridolfing (DE)
(72) Inventor: Patell, Darshan Suresh, Plano, TX 75025 (US); Nothdurft, Silke, 89312 Günzburg (DE); Lehmann, Nico, 86453 Dasing Wessiszell (DE); dos Santos Silva, Gabriel Cenato, 12.246-190 São José dos Campos, São Paulo (BR); Ma, Min, Plano, TX 75025 (US); Li, Chunsheng, Shanghai (CN); Sun, Jiwei, Shanghai (CN); Gleich, Stefan Thomas, 86167 Augsburg (DE); Jungbäck, Harald, 82216 Maisach (DE); Nothegger, Denise Selina, 86391 Stadtbergen (DE); Hahn, Christian, 89344 Aislingen (DE); Blanz, Markus, 86343 Königsbrunn (DE); Prommer, Robert, 86405 Meitingen (DE); Weigand, Benjamin, 86150 Augsburg (DE)
(74) Representative: Lorenz, Markus

(56) References cited:
- US-A1- 2005 233 635
- US-A1- 2009 163 043
- US-A1- 2012 014 656
- US-B1- 9 488 795

## Description

The invention relates to a patch panel for a distribution frame, the patch panel comprising a frontside interface and a backside interface, according to the preamble of claim 1.

The invention also relates to a distribution frame for a data center, comprising at least a patch panel of a first type, the patch panel of the first type comprising a frontside interface and a backside interface.

In a data center, patch panels for connecting and routing of circuit connections are commonly installed in a distribution frame (also known as "rack"). Each patch panel can be inserted in a corresponding slot at a specific altitude level in the distribution frame. Such a patch panel comprises a large number of connectors which should be accessible for the operator.

Due to the growing needs to transmit a large volume of data signals over relatively long distances with little or no signal degradation, optical fibers and optical connectors are widely used in the telecommunication field. Therefore, specific patch panels comprising optical connectors are frequently utilized.

In order to increase the number of connectors per slot in the distribution frame, the connectors can be distributed to a frontside interface and a backside interface of a respective patch panel. In order to make it possible for the operator to also access the backside interface from the front side of the distribution frame, especially when relative space is tight, it is known to mount the patch panel pivotable to the distribution frame. Such a concept is, for example, described in US 6,631,237 B2.

In order to further facilitate the assembly process of a patch panel with a frontside interface and a backside interface it is also known to combine a pivotable (rotational) movement with an extendable (translational) movement of the patch panel from the distribution frame, as disclosed in EP 2 409 192 B1 or US 2012/014656 A1.

Another possibility to increase the number of connectors in a patch panel is proposed in US 9,488,795 B1. In order to increase the density of connectors, the frontside interface of the patch panel of US 9,488,795 B1 is split into two parts, both parts running against each other, and being angled to each other and to a common backside row. Therefore, the length of the frontside interface can be increased, and thus the frontside interface may receive a higher number of connectors with still good accessibility due to the angled arrangement.

However, due to often restricted space conditions there is still a demand to optimize the number of connectors per patch panel, to improve the accessibility to each of the connectors by the operator, and to optimize the cable routing inside the patch panel.

For further technological background, the reader is referred to US 2005/233635 A1 and to US 2009/163043 A1.

The object of this invention is to present an enhanced patch panel which can receive a large number of connectors and preferably also provides good accessibility to the connectors in addition to advantageous cable routing properties.

It is also an object of this invention to present a distribution frame which can receive a large number of connectors per slot and preferably also provides good accessibility to the connectors in addition to advantageous cable routing properties.

With regard to the patch panel the object is fulfilled by the features of claim 1. Relating to the distribution frame the object is fulfilled by the features of claim 14.

Further embodiments of the invention will be described hereinafter as well as in the dependent claims.

A patch panel for a distribution frame according to the invention comprises a frontside interface having one or more insertions for at least two optical connectors arranged in a frontside row, and a backside interface having one or more insertions for at least two optical connectors arranged in a backside row.

The frontside interface is preferably situated on a first side of the patch panel, with the backside interface being situated on a second side of the patch panel which is located opposite to the first side.

The insertions of the frontside interface and/or of the backside interface can be slots or the like, e. g., a support rail, to receive the connectors. Preferably, the connectors can be securely locked in the insertions when being properly inserted.

Preferably, the connectors of the frontside row and/or of the backside row are arranged next to each other, especially directly adjacent to each other, when being inserted in the respective insertions.

According to the invention, the backside row of insertions is orientated angularly to the frontside row of insertions.

In a preferred embodiment of the invention, at least two optical connectors are inserted in the one or more insertions of the frontside interface and/or at least two optical connectors are inserted in the one or more insertions of the backside interface.

Therefore, the backside row of connectors can preferably be orientated angularly to the frontside row of connectors.

The angular/inclined arrangement of the backside row of connectors relative to the frontside row of connectors can be advantageous as the length of the frontside interface is commonly limited by the width of the respective slot in the distribution frame in which the panel is to be inserted. Therefore, by orienting the backside row of connectors angularly to the frontside row of connectors, the number of connectors in the backside interface can be increased as the possible length of the backside interface increases relatively to the frontside interface, e.g., by a factor of about 1.4 in case of an angle of 45° in between the two rows.

In addition, there can still be sufficient space for cable routing between the interfaces as the angular arrangement between the rows can lead to a funnel shape between the connectors of the frontside interface and the backside interface.

Thus, the number of connectors per patch panel can be increased without limiting the cable routing possibilities.

Advantageously a high density patch panel can be provided.

In an embodiment of the invention, the backside interface is connected to the frontside interface by means of a first side section and a second side section.

Preferably, the first side section is longer than the second side section, with the length difference of the two sides depending on the angle between the frontside interface and the backside interface.

Preferably, the first side section and/or the second side section are realized as side walls.

According to the invention, the patch panel comprises a main frame supporting the frontside interface and the backside interface.

Thus, the interfaces can be mounted onto the main frame or can be formed monolithically with the main frame. The main frame can also support the side sections, especially the side walls, or form the side sections monolithically.

According to the invention, the patch panel comprises a mounting frame for mounting the patch panel to the distribution frame.

However, in particular cases the main frame can also be mounted directly to the distribution frame (without using a mounting frame at all).

Preferably, the main frame is attached to the mounting frame.

According to the invention, the main frame is pivotable relative to the mounting frame about a main rotation axis.

However, in particular cases the main frame can also be directly pivotable to the distribution frame, e. g., by connecting a hinge of the main frame (or the like) to the distribution frame.

A pivotable patch panel can improve the accessibility of the interfaces for an operator and thus facilitate the assembling and wiring process of the patch panel and the distribution frame.

According to an embodiment of the invention, the main rotation axis is located at the frontside interface and/or at the first side section, preferably at the junction of the frontside interface and the first side section.

Especially when the first side section is longer than the second side section, the patch panel can be pivoted easier from the distribution frame, if the main axis is located at the junction or adjacent to the junction of the frontside interface and the first side section.

According to an embodiment of the invention, the second side section connecting the backside interface to the frontside interface has a chamfered or curved section.

A chamfered or curved section of the second side section and/or of the backside interface can make it possible to increase the maximum number of connectors of the backside interface, although the patch panel can still be pivotable relative to the distribution frame.

In an embodiment of the invention, the main frame consists of two portions, wherein a first portion of the main frame supports the frontside interface, and wherein a second portion of the main frame supports the backside interface.

It can be beneficial to use a main frame which is built of several portions, especially of two portions. The separation area of the portions of the main frame can be situated in the intermediate range between the interfaces.

However, also a monolithic main frame is possible.

According to an embodiment of the invention, the first portion of the main frame is pivotable relative to or extendable from the second portion of the main frame.

Thus, the interfaces can be movably connected to each other. The first portion of the main frame can be pivotable relative to the second portion of the main frame via a secondary axis or a hinge.

A frontside interface which is pivotable and/or extendable from the backside interface can be beneficial to further improve the accessibility of all connectors of the patch panel.

Preferably, the two portions of the main frame are moved relatively to each other on the same vertical level, in particular on the level of a common slot in the distribution frame.

Preferably, the movement of the first portion of the main frame relative to the second portion of the main frame is realized either rotational (pivotable) or translational (extendable). However, also a joint rotational and translational movement can be possible.

In an embodiment of the invention, the backside row has or can receive at least as many connectors as the frontside row, preferably more connectors than the frontside row.

Preferably, the backside row of connectors is longer than or at least as long as the frontside row of connectors. The backside interface can be longer than or can be at least as long as the frontside interface.

It can be a particular advantage of the invention that the backside row can have more connectors than the frontside row. However, the backside row can also have the same number of connectors as the frontside row or can even have less connectors than the frontside row.

In an embodiment of the invention, the backside row is orientated in an angle between 5° and 85° to the frontside row, preferably in an angle between 10° and 45°, more preferably in an angle between 20° and 25°, in particular in an angle of 22.5°.

Most preferably, the backside row can be orientated in an angle of about 22.5° relative to the frontside row, for example in an angle of 22.5° +/- 5°, preferably 22.5° +/- 1°.

In an embodiment of the invention, the frontside row and/or the backside row extends linearly.

Although a linear or straight frontside row and/or backside row is preferred, also a curved shape of the frontside row and/or of the backside row is possible. Most preferably, the frontside row and/or the backside row extend linearly or in a straight line along a respective longitudinal axis.

According to an embodiment of the invention, at least one of the optical connectors is a hybrid electrical/optical connector.

Thus, one of the connectors, some of the connectors, or all of the connectors can have at least one optical inner conductor and at least one electrical inner conductor. However, preferably optical connectors which only have optical inner conductors can be used.

For example, at least one of the optical connectors can be realized as LC-connector (also known as Lucent Connector, Little Connector or Local Connector), SC-connector (also known as Subscriber Connector, Square Connector or Standard Connector), 3M™ Expanded Beam Optical Interconnect, MDC connector (US Conec), Senko SN® connector, or MPO-connector (also known as Multifiber Push-On or Multipath Push-On Connector). The optical connector can have between one and sixteen or even more optical inner conductors, preferably two to eight inner conductors, most preferably exactly four optical inner conductors. In general the invention shall not be limited to any specific type of optical connector.

It is also possible that the frontside interface and/or the backside interface comprises at least one electrical connector.

According to an advantageous embodiment of the invention, at least two of the connectors of the frontside interface and/or of the backside interface are arranged in a common cassette.

Each cassette can provide a housing for one or more connectors.

Thus, the insertions of the frontside interface and/or of the backside interface can be designed to receive the cassettes which can finally receive the connectors.

Different cassettes with different designs, e. g., for the support of different optical connectors, can be combined in the patch panel. Also different types of connectors can be combined in a common cassette.

When utilizing the cassettes, the handling of the connectors and the modularity of the patch panel can be improved.

For instance, between two and ninety-six connectors, preferably between four and thirty-two connectors, for example also between eight and twenty-four connectors, can be arranged in the cassette.

In general it is also possible that only a single connector is arranged in the cassette. However, preferably one or more connectors are arranged in a common cassette.

In an embodiment of the invention, the cassette comprises at least one backside port (preferably exactly one backside port) which is connected to all of the connectors of the respective cassette.

Preferably, all of the inner conductors of the respective connectors are collected in the at least one backside port.

According to an advantageous embodiment of the invention, at least two of the cassettes are arranged next to each other in the respective row.

Most preferably, all of the connectors are arranged in respective cassettes, with the frontside interface having at least two cassettes arranged in the frontside row and the backside interface has at least two cassettes arranged in the backside row.

In an embodiment of the invention, the frontside interface and/or the backside interface has one or more slots for the insertion of one or more of the cassettes. Preferably, the insertions of the interfaces can be designed as slots to receive the cassettes.

The insertions/slots and/or the cassettes can comprise locking means and/or snapping means such that a cassette can be securely locked in the respective slot.

In an embodiment of the invention, the connectors of the frontside interface and/or of the backside interface can be arranged in one or more levels, preferably in two, three, or four levels (or even more levels).

Preferably, the connectors of the frontside interface and/or of the backside interface are arranged in respective cassettes with the cassettes being arranged in different levels. For example, the frontside row and/or the backside row can comprise several cassettes next to each other forming a first group of cassettes and a second row of cassettes forming a second group of cassettes, wherein the first group of cassettes can be mounted on top of the second group of cassettes in the respective row.

According to an embodiment of the invention, the patch panel comprises an access port for one or more trunk cables of the distribution frame or for multiple conductors of the one or more trunk cables.

The optical fibers and - optionally - also the electrical cables can be routed between a cable duct / cable funnel of the distribution frame and the connectors of the patch panel and/or the backside ports of the cassettes. The trunk cable, also known as "feeder cable", can be a cable, especially a wiring harness, which is used to connect different patch panels of the distribution frame, different distribution frames, or to connect the patch panel to any other electrical unit.

The trunk cable or the conductors of the trunk cable can be fed into the patch panel via the access port which can preferably be situated at the main frame or at the mounting frame. For example, the access port can be situated at one of the side sections, preferably at the first side section, especially close to the main axis (in case of a pivotable patch panel).

The access port can provide a cable strain relief, e. g., cable clamps.

In an embodiment of the invention, the patch panel (preferably the main frame or the access port) comprises at least one guiding member for directing one or more cables, preferably the trunk cables, the conductors of the trunk cables, and/or the patch cables, relatively to the main rotation axis of the main frame such that the cables do not become subjected to a mechanical load when the interfaces are pivoted from the mounting frame.

As already stated, the transition of the fibers / cables between the distribution frame and the patch panel is preferably positioned in proximity to the main axis, which can avoid the necessity for an excess length of the fibers / cables. However, also guiding the fibers / cables in an appropriate manner can avoid such an excess length. Consequently, the need for additional storage place for the fibers / cables inside the patch panel can be reduced.

According to an advantageous embodiment of the invention, the guiding member is situated in proximity to the main axis.

The guiding member can also be used to form the main axis. However, the guiding member is preferably separated from the main axis and may then be situated as close as possible to the main axis.

According to an advantageous embodiment of the invention, the access port comprises a distribution unit for the distribution of the conductors of the trunk cable to the backside ports of the cassettes.

The distribution unit can be used to avoid line tangle of the optical fibers or electrical cables, especially for long-range cables. The distribution unit can be used to separate at least some of the individual inner conductors of the trunk cable into short-range cables (i.e., jumper cables or patch cables).

In an embodiment of the invention, the access port comprises a cable bridge for receiving the trunk cable or the conductors of the trunk cable at a first level and for guiding one or more patch cables for connecting one or more of the connectors at a second level.

Proper crossing of the trunk cable lines and the jumper/patch cable lines can be organized by the cable bridge. Preferably, the cable bridge has two floors, for example a first floor for the trunk cable lines and a second floor for the jumper/patch cables. However, the cable bridge can also have more than two floors.

Preferably, the cable bridge is situated in proximity to the hinge or main axis for pivoting the patch panel from the distribution frame.

According to an embodiment of the invention, the main frame has at least one opening for guiding cables to adjacent patch panels in the distribution frame.

In such a manner connections can be made directly between the patch panels of different levels / slots in the distribution frame. In case one of the involved patch panel is pivotable from the distribution frame it can be preferred to position the opening as close as possible to the respective main rotation axis.

According to an advantageous embodiment of the invention, the patch panel comprises guidance tracks for guiding one or more patch cables from the backside interface to the frontside interface.

The guidance track can comprise a protective enclosure.

Preferably, at least one guidance track is situated at the second side section and mainly follows the course of the second side section from the backside interface to the frontside interface. Also the frontside interface and/or the backside interface can comprise at least one guidance track, especially following the course of the respective row of connectors, in order to guide optical/electrical lines between the connectors.

The guidance tracks prevent that the jumper/patch cables from being clamped between the patch panel and the distribution frame while pivoting the patch panel from the distribution frame.

The invention also relates to a distribution frame for a data center. The distribution frame comprises at least one patch panel of a first type, the patch panel of the first type being designed according to the patch panel of claim 1.

Preferably, the distribution frame is a 19 inch rack.

The distribution frame may comprise multiple slots in different altitude levels for the insertion of the patch panels.

According to an advantageous embodiment of the invention, one of the patch panels of the first type and a second patch panel of a different type or of the first type form a group of two patch panels which are arranged in the same slot in the distribution frame.

In such a manner the number of connectors per slot can be increased.

According to an embodiment of the invention, at least one of the patch panels of the group of patch panels, preferably both patch panels, are pivotable relative to and/or extendable from the distribution frame.

Thus, most or all of the connectors can be accessed from the operator - also when space is tight.

Features that have already been described in connection with the patch panel can readily also be applied to the distribution frame - and vice versa.

It is additionally stated that terms, such as "comprising", "having" or "employing" do not exclude further features or process steps. Furthermore it is mentioned that terms like "a" or "the", suggesting a single feature or a single step, are not meant to exclude a plurality of such features or steps - and vice versa.

The following description has been made with reference to the accompanying figures.

The figures illustrate preferred embodiments in which individual features of the present invention are shown in combination with each other. However, features of an exemplary embodiment can also be implemented independently of the other features of the same embodiment and can readily be rearranged by the person skilled in the art to other advantageous combinations with features of other exemplary embodiments.

The use of the same reference numbers in different figures may, where feasible, indicate similar or identical items.

The figures show schematically:
- Fig. 1: a patch panel according to a first exemplary embodiment of the invention in a perspective view;
- Fig. 2: the patch panel of Fig. 1 in a pivoted condition;
- Fig. 3: a patch panel according to a second exemplary embodiment of the invention in a perspective view;
- Fig. 4: a distribution frame according to the invention with several patch panels in a perspective view;
- Fig. 5: a patch panel according to a third exemplary embodiment of the invention in a top view;
- Fig. 6: a patch panel according to a fourth exemplary embodiment of the invention in a top view;
- Fig. 7: a patch panel according to a fifth exemplary embodiment of the invention in a perspective view;
- Fig. 8: a patch panel according to a sixth exemplary embodiment of the invention in a perspective view;
- Fig. 9: the patch panel of Fig. 8 in a pivoted condition and mounted in a distribution frame;
- Fig. 10: a patch panel according to a seventh exemplary embodiment of the invention in a top view; and
- Fig. 11: the patch panel of Fig. 10 in an extended condition in a perspective view.

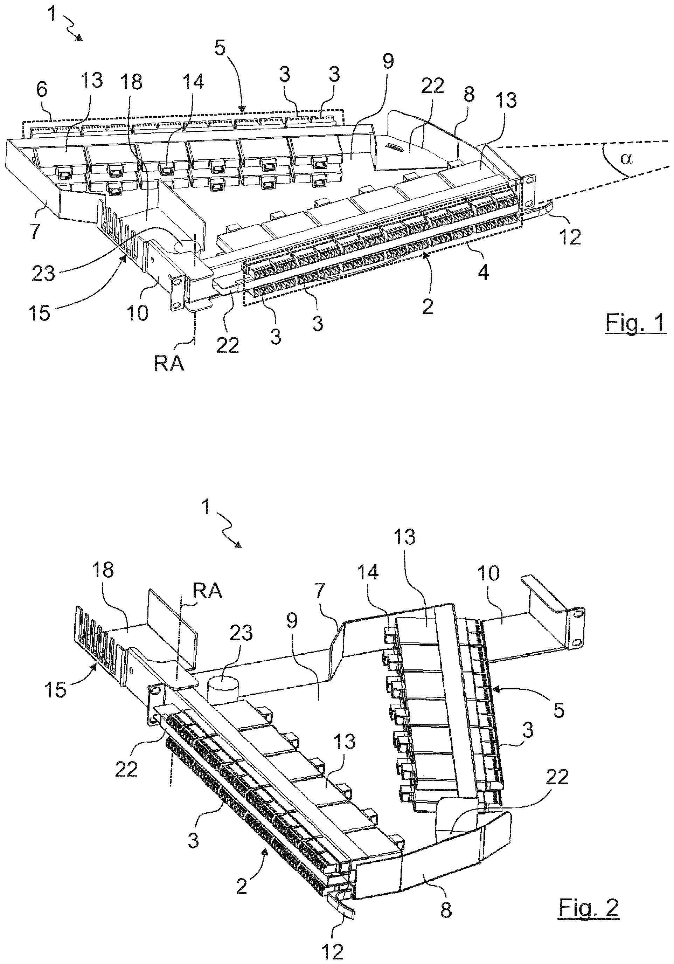

Figures 1 and 2 show a patch panel 1 according to a first embodiment of the invention in a perspective view.

The patch panel 1 comprises a frontside interface 2 having at least two optical connectors 3 which are arranged in a frontside row 4 (c. f., figure 1). The patch panel 1 also comprises a backside interface 5 having at least two optical connectors 3 which are arranged in a backside row 6 (c. f., figure 1). The connectors 3 are inserted in respective insertions of the interfaces 2, 5. According to the invention, the backside row 6 of inser-tions/connectors 3 is orientated angularly to the frontside row 4 of insertions/connectors 3 (e. g., according to angle α in figure 1).

The backside interface 5 is connected to the frontside interface 2 by means of a first side section 7 and a second side section 8. Both side sections 7, 8 are formed as side walls. The first side section 7 is longer than the second side section 8.

The patch panel 1 further comprises a main frame 9 supporting the frontside interface 2 and the backside interface 5. The main frame 9 also supports the side sections 7, 8.

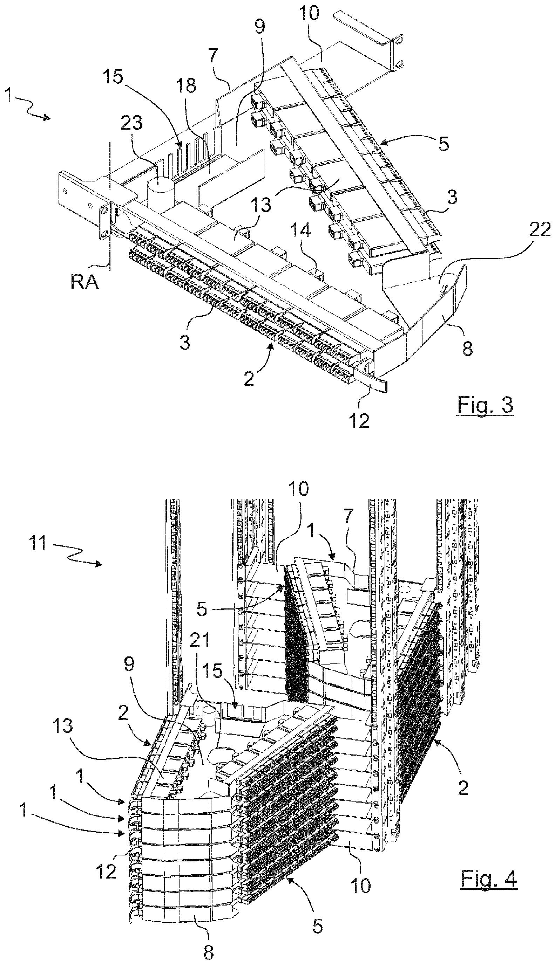

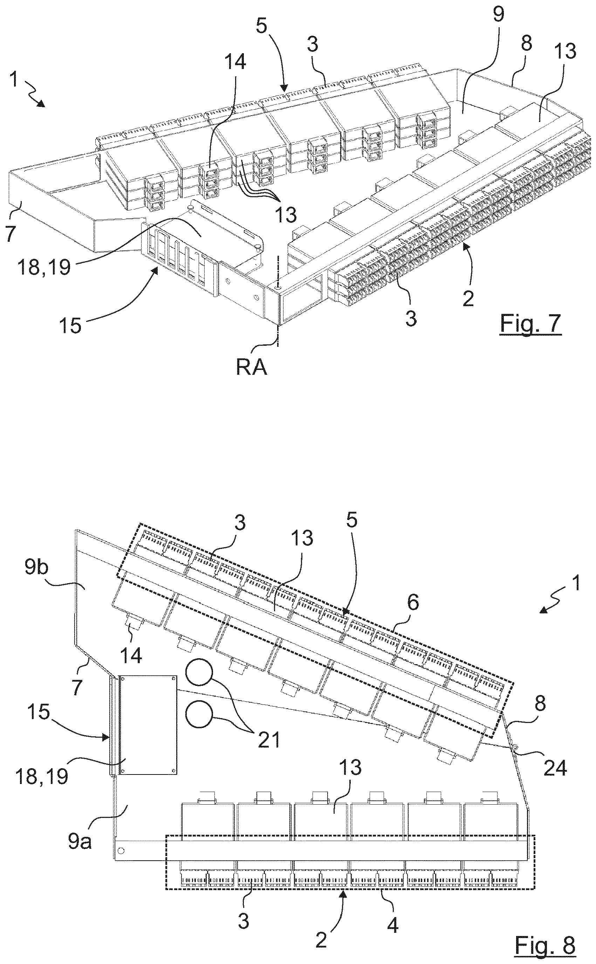

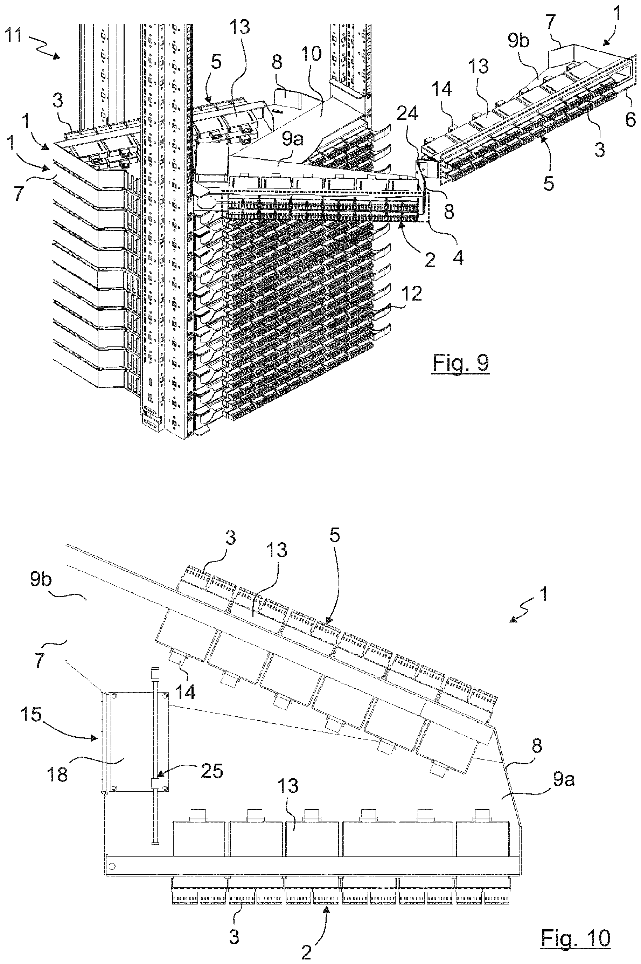

The patch panel 1 also comprises a mounting frame 10 for mounting the patch panel to a distribution frame 11 (c.f. figure 4 and 9). The mounting frame 10 is not shown in figures 7, 8, 10, and 11 for simplification of the drawings.

As can be seen, the main frame 9 is pivotable to the mounting frame 10 about a main rotation axis RA. The patch panel 1 can comprise a handle 12 for pivoting the patch panel 1 from the distribution frame 11. Figure 2 shows the patch panel in a pivoted state. The main rotation axis RA is located at the junction of the frontside interface 2 and the first side section 7. In order to make it possible to pivot the main frame 9 from the mounting frame 10 even in case of a rather long backside interface 5, the second side section 8 connecting the backside interface 5 to the frontside interface 2 has a curved or rather chamfered section.

According to the embodiment of figures 1 and 2 the backside row 6 has as many connectors 3 as the frontside row 4. Nevertheless, the space conditions inside the patch panel 1 can still be very good due to the angular arrangement of the backside row 6 to the frontside row 4.

In the embodiments disclosed herein, the backside row 6 is oriented in an angle α of about 22.5° to the frontside row 4. However, the backside row 6 can also be oriented in an angle α between 5° and 85° to the frontside row 4, preferably in an angle α between 10° and 45°, more preferably in an angle α between 20° and 25°.

In the embodiments disclosed herein, the frontside row 4 and/or the backside row 6 extend linearly or, in other words, in a straight manner. However, as an alternative, the frontside row 4 and/or the backside row 6 can also extend in a curved fashion.

It is also possible to arrange one or more additional connectors spaced apart from the frontside row 4 and/or the backside row 6, e.g., along the first side section 7 and/or along the second side section 8.

The optical connectors 3 can be of any type. The optical connectors 3 can even be built as hybrid electrical/optical connectors. Preferably, at least two of the connectors 3 of the frontside interface 2 and/or of the backside interface 5 are arranged in a common cassette 13. For example, between two and thirty-two connectors 3 or even more connectors 3, preferably between four and sixteen connectors 3, can be arranged in a single cassette 13. In the embodiments each cassette 13 houses two connectors 3, with each of the connectors 3 having four optical conductors. However, various connector types with various numbers of conductors can be used in an arbitrary distribution relative to the cassettes 13.

Each of the cassettes 13 comprises a backside port 14 which is connected to all of the connectors 3 of the respective cassette 13. Thus, all conductors of the connectors 3 of the respective cassette 13 can be gathered in the backside port 14. The cassettes 13 are arranged next to each other in the respective row 4, 6, with the interfaces 2, 5 of the patch panel 1 having slots for the insertion and secure fixation of the cassettes 13.

In the embodiments of figures 1 to 4 and 9 to 11 the connectors 3 / the cassettes 13 of the frontside interface 2 and/or of the backside interface 5 are arranged in two levels. However, the connectors 3 / the cassettes 13 can also be arranged in a single level only or even in three (c.f., figures 7 and 8) or more levels.

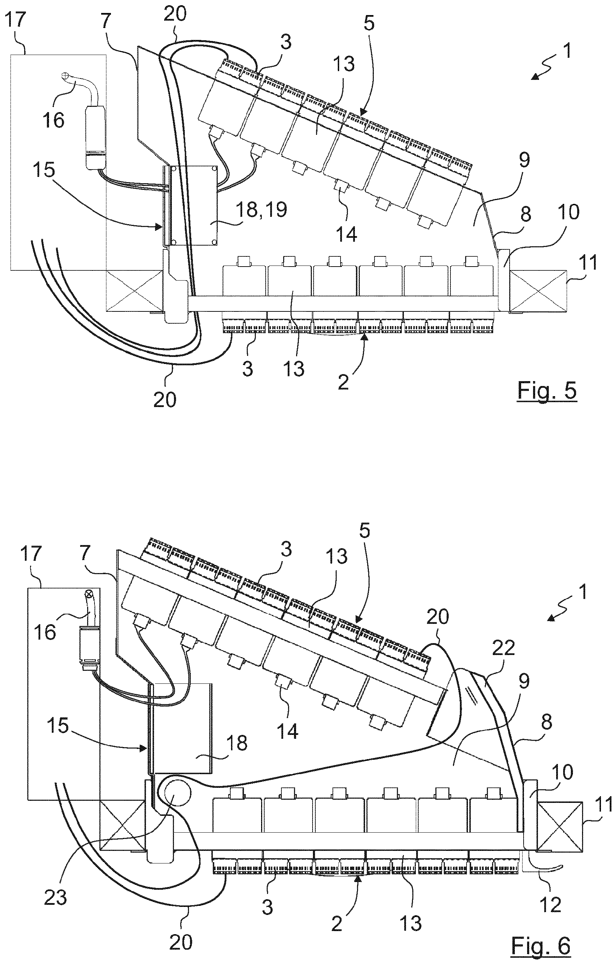

The patch panel 1 comprises an access port 15 for one or more trunk cables 16 (c.f., figures 5 and 6) of the distribution frame 11 or for multiple conductors of the trunk cables 16. The trunk cable 16 can be guided to the patch panel 1 via a cable duct 17 (c.f., figures 5 and 6) of the distribution frame 11. The trunk cable 16 can be separated into several lines / inner conductors and can be distributed by the access port 15, as can be also seen in figures 5 and 6.

According to the embodiment as shown in figures 1 and 2, the access port 15 is connected to the mounting frame 10. However, the access port 15 may also be connected to the main frame 9 as can be seen in the embodiment of figure 3. The access port 15 can be built to support and guide the respective trunk cable 16 or its conductors.

Figures 4 and 9 show a distribution frame 11 for a data center, comprising several patch panels 1 of a first type according to the present invention. As can be seen, always two patch panels 1 are inserted into a common slot (or rather mounted at the same altitude level), forming a group of two patch panels 1. Therefore, the amount of connectors 3 of a single altitude level of the distribution frame 11 can be increased by a factor of two. Since at least one of the patch panels 1 of the group of patch panels 1, preferably both patch panels 1, can be pivoted from the distribution frame 11, the operator can still readily access all of the connectors 3 of the interfaces 2, 5 of each patch panel 1.

Figures 5 and 6 show wiring examples for two further exemplary patch panels 1. As can be seen, the access port 15 can comprise a distribution unit 18 for the distribution of the inner conductors / lines of the trunk cable 16 to the backside ports 14 of the cassettes 13. The access port 15 or the distribution unit 18 can comprise a cable bridge 19 to receive the trunk cable 16 or its conductors at a first, lower level and to guide one or more patch cables 20 for connecting one or more of the connectors 3 at a second, higher level.

Optionally, the main frame 9 can have at least one opening 21 (c. f., figure 4 and figure 8) for guiding cables, e. g. patch cables 20, to adjacent patch panels 1 in the distribution frame 11.

As can for example be seen in figures 1 and 6, the patch panel 1 can comprise guidance tracks 22 to guide one or more patch cables 20 from the backside interface 5 to the frontside interface 2. A guidance track 22 can comprise cable funnels, cable channels and/or cable grooves for guiding the patch cables 20.

In order to prevent the patch cables 20 and/or the trunk cable 16 and/or other cables/lines from being subjected to mechanical load when the interfaces 2, 5 are pivoted from the mounting frame 10, the access port 15 can comprise at least one guiding member 23 for directing one or more cables close, preferably proximately or, in other words, in proximity, to the main axis RA. This can avoid the need for an excess length of the cables 16, 20 inside the patch panel 1.

As was demonstrated in the previous embodiments, the main frame 9 can be a single part. However, the main frame 9 can also consist of two (or even more) portions, wherein a first portion 9a of the main frame 9 supports the frontside interface 2, and wherein a second portion 9b of the main frame 9 supports the backside interface 5. This is exemplarily shown in figures 8 to 11.

A main frame 9 consisting of several, e.g. two, portions 9a, 9b can improve the accessibility of the connectors 3 / the interfaces 2, 5 even more. For example, the first portion 9a of the main frame 9 can be pivotably mounted to the second portion 9b of the main frame 9 via a hinge 24. Figure 8 shows such a patch panel 1 in a closed state and figure 9 shows the patch panel 1 in a pivoted state when being mounted in the distribution frame 11.

In case of a main frame 9 which is divided into two portions 9a, 9b it can also be beneficial to use two openings 21 for guiding patch cables 20 (or any other cables) to adjacent patch panels 1 in the distribution frame 11 - especially one opening 21 per interface 2, 5.

As is demonstrated in the embodiment of figures 8 and 9, the backside row 6 can have even more connectors 3 than the frontside row 4 which is possible due to the enlarged backside interface 5 because of its angular arrangement to the frontside interface 2.

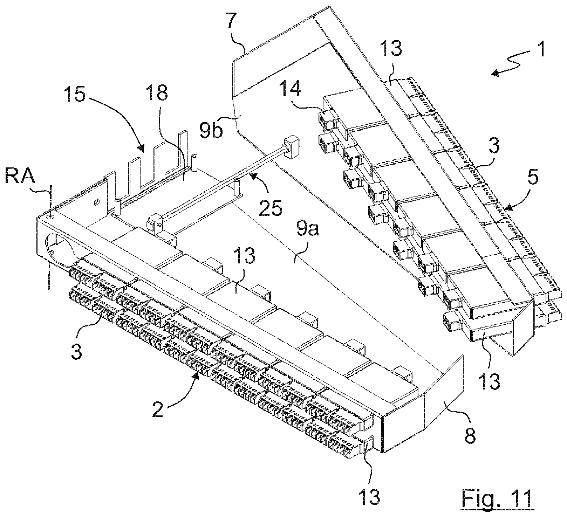

As an alternative to a pivotable first portion 9a of the main frame 9, figures 10 and 11 show another embodiment of the patch panel 1 according to the invention, in which the first portion 9a of the main frame 9 is extendable from the second portion 9b of the main frame 9, e. g., via one or more telescopic rails 25. For simplification, only a single telescopic rail 25 is shown in the embodiment of figures 10 and 11. However, in order to increase the robustness of the patch panel 1, preferably more than one telescopic rail 25 may be used, for example two telescopic rails 25. Especially when only a single telescopic rail 25 is used, it can be beneficial to design the telescopic rail 25 with a cornered profile, e. g., a rectangular profile (as in figures 10 and 11) or a triangular profile, in order to prevent the extended first portion from tilting. However, in special cases also a telescopic rail 25 with a circular profile can be used (in particular when more than one telescopic rail 25 is applied).

## Claims

1. A patch panel (1) for a distribution frame (11), the patch panel (1) comprising a frontside interface (2) having one or more insertions for at least two optical connectors (3) arranged in a frontside row (4), and a backside interface (5) having one or more insertions for at least two optical connectors (3) arranged in a backside row (6), wherein the backside row (6) of insertions is orientated angularly to the frontside row (4) of insertions, the patch panel (1) further comprising a main frame (9) supporting the frontside interface (2) and the backside interface (5), and a mounting frame (10) for mounting the patch panel (1) to the distribution frame (11),
**characterized in that**
the main frame (9) is pivotable relative to the mounting frame (10) about a main rotation axis (RA).

2. The patch panel (1) according to claim 1,
**characterized in that**
at least two optical connectors (3) are inserted in the one or more insertions of the frontside interface (2) and/or at least two optical connectors (3) are inserted in the one or more insertions of the backside interface (5).

3. The patch panel (1) according to claim 1 or 2,
**characterized in that**
the backside interface (5) is connected to the frontside interface (2) by means of a first side section (7) and a second side section (8), wherein the first side section (7) is longer than the second side section (8), with the length difference of the two side sections (7, 8) depending on the angle (α) between the frontside interface (2) and the backside interface (5).

4. The patch panel (1) according to one of the claims 1 to 3,
**characterized in that**
the backside interface (5) is longer than the frontside interface (2).

5. The patch panel (1) according to one of the claims 1 to 4,
**characterized in that**
the main frame (9) consists of two portions (9a, 9b), wherein a first portion (9a) of the main frame (9) supports the frontside interface (2), and wherein a second portion (9b) of the main frame (9) supports the backside interface (5), wherein the first portion (9a) of the main frame (9) is pivotable relative to or extendable from the second portion (9b) of the main frame (9).

6. The patch panel (1) according to one of the claims 1 to 5,
**characterized in that**
the backside row (6) has or can receive at least as many connectors (3) as the frontside row (4), preferably more connectors (3) than the frontside row (4).

7. The patch panel (1) according to one of the claims 2 to 6,
**characterized in that**
at least two of the connectors (3) of the frontside interface (2) and/or of the backside interface (5) are arranged in a common cassette (13), wherein the frontside interface (2) and/or the backside interface (5) preferably has one or more slots for the insertion of one or more of the cassettes (13).

8. The patch panel (1) according to claim 7,
**characterized in that**
at least two of the cassettes (13) are arranged next to each other in the respective row (4, 6).

9. The patch panel (1) according to one of the claims 1 to 8,
**characterized in that**
the connectors (3) of the frontside interface (2) and/or of the backside interface (5) can be arranged in one or more levels, preferably in two, three, or four levels.

10. The patch panel (1) according to one of the claims 1 to 9,
**characterized in that**
the patch panel (1) comprises an access port (15) for one or more trunk cables (16) of the distribution frame (11) or for multiple conductors of the one or more trunk cables (16).

11. The patch panel (1) according to claim 10,
**characterized in that**
the patch panel (1) comprises at least one guiding member (23) for directing one or more cables, preferably the trunk cables (16), the conductors of the trunk cables (16) and/or the patch cables (20), relatively to the main rotation axis (RA) of the main frame (9) such that the cables (16, 20) do not become subjected to a mechanical load when the interfaces (2, 5) are pivoted from the mounting frame (10).

12. The patch panel (1) according to claim 11,
**characterized in that**
the guiding member (23) is situated in proximity to the main rotation axis (RA).

13. The patch panel (1) according to one of the claims 10 to 12,
**characterized in that**
the access port (15) comprises a cable bridge (19) for receiving the trunk cable (16) or the conductors of the trunk cable (16) at a first level and for guiding one or more patch cables (20) for connecting one or more of the connectors (3) at a second level.

14. A distribution frame (11) for a data center, comprising at least one patch panel (1) of a first type according to one of the claims 1 to 13.

15. The distribution frame (11) according to claim 14
**characterized in that**
one of the patch panels (1) of the first type and a second patch panel (1) of a different type or of the first type form a group of two patch panels (1) which are arranged in the same slot in the distribution frame (11).

## Patentansprüche

1. Rangierfeld (1) für einen Verteilerrahmen (11), wobei das Rangierfeld (1) eine vordere Schnittstelle (2) mit einem oder mehreren Einschüben für wenigstens zwei in einer vorderen Reihe (4) angeordnete optische Steckverbinder (3) und eine hintere Schnittstelle (5) mit einem oder mehreren Einschüben für wenigstens zwei in einer hinteren Reihe (6) angeordnete optische Steckverbinder (3) aufweist, wobei die hintere Reihe (6) von Einschüben winklig bzw. geneigt zu der vorderen Reihe (4) von Einschüben ausgerichtet ist, wobei das Rangierfeld (1) des Weiteren einen Hauptrahmen (9), der die vordere Schnittstelle (2) und die hintere Schnittstelle (5) trägt, und einen Montagerahmen (10) zum Montieren des Rangierfelds (1) an dem Verteilerrahmen (11) aufweist,
**dadurch gekennzeichnet, dass**
der Hauptrahmen (9) um eine Hauptrotationsachse (RA) relativ zu dem Montagerahmen (10) schwenkbar ist.

2. Rangierfeld (1) nach Anspruch 1,
**dadurch gekennzeichnet, dass**
wenigstens zwei optische Steckverbinder (3) in die ein oder mehrere Einschübe der vorderen Schnittstelle (2) eingeführt sind und/oder wenigstens zwei optische Steckverbinder (3) in die ein oder mehrere Einschübe der hinteren Schnittstelle (5) eingeführt sind.

3. Rangierfeld (1) nach Anspruch 1 oder 2,
**dadurch gekennzeichnet, dass**
die hintere Schnittstelle (5) mittels eines ersten Seitenteils (7) und eines zweiten Seitenteils (8) mit der vorderen Schnittstelle (2) verbunden ist, wobei das erste Seitenteil (7) länger ist als das zweite Seitenteil (8), und wobei der Längenunterschied zwischen den zwei Seitenteilen (7, 8) von dem Winkel (a) zwischen der vorderen Schnittstelle (2) und der hinteren Schnittstelle (5) abhängt.

4. Rangierfeld (1) nach einem der Ansprüche 1 bis 3,
**dadurch gekennzeichnet, dass**
die hintere Schnittstelle (5) länger ist als die vordere Schnittstelle (2).

5. Rangierfeld (1) nach einem der Ansprüche 1 bis 4,
**dadurch gekennzeichnet, dass**
der Hauptrahmen (9) aus zwei Teilen (9a,9b) besteht, wobei ein erster Teil (9a) des Hauptrahmens (9) die vordere Schnittstelle (2) trägt, und wobei ein zweiter Teil (9b) des Hauptrahmens (9) die hintere Schnittstelle (5) trägt, wobei der erste Teil (9a) des Hauptrahmens (9) relativ zu dem zweiten Teil (9b) des Hauptrahmens (9) schwenkbar oder aus demselben ausziehbar ist.

6. Rangierfeld (1) nach einem der Ansprüche 1 bis 5,
**dadurch gekennzeichnet, dass**
die hintere Reihe (6) wenigstens so viele Steckverbinder (3) wie die vordere Reihe (4) aufweist oder aufnehmen kann, vorzugsweise mehr Steckverbinder (3) als die vordere Reihe (4).

7. Rangierfeld (1) nach einem der Ansprüche 2 bis 6,
**dadurch gekennzeichnet, dass**
wenigstens zwei der Steckverbinder (3) der vorderen Schnittstelle (2) und/oder der hinteren Schnittstelle (5) in einer gemeinsamen Kassette (13) angeordnet sind, wobei die vordere Schnittstelle (2) und/oder die hintere Schnittstelle (5) vorzugsweise einen oder mehrere Steckplätze zum Einführen von einer oder mehrerer der Kassetten (13) aufweist.

8. Rangierfeld (1) nach Anspruch 7,
**dadurch gekennzeichnet, dass**
wenigstens zwei der Kassetten (13) in der jeweiligen Reihe (4,6) nebeneinander angeordnet sind.

9. Rangierfeld (1) nach einem der Ansprüche 1 bis 8,
**dadurch gekennzeichnet, dass**
die Steckverbinder (3) der vorderen Schnittstelle (2) und/oder der hinteren Schnittstelle (5) in einer oder mehreren Ebenen, vorzugsweise in zwei, drei oder vier Ebenen, angeordnet sein können.

10. Rangierfeld (1) nach einem der Ansprüche 1 bis 9,
**dadurch gekennzeichnet, dass**
das Rangierfeld (1) einen Zugangsport (15) für ein oder mehrere Hauptversorgungskabel (16) des Verteilerrahmens (11) oder für mehrere Leiter des ein oder mehreren Hauptversorgungskabels (16) aufweist.

11. Rangierfeld (1) nach Anspruch 10,
**dadurch gekennzeichnet, dass**
das Rangierfeld (1) wenigstens ein Führungselement (23) zur Führung von einem oder mehreren Kabeln, vorzugsweise der Hauptversorgungskabel (16), der Leiter der Hauptversorgungskabel (16) und/oder von Patchkabeln (20), relativ zu der Hauptrotationsachse (RA) des Hauptrahmens (9) aufweist, so dass die Kabel (16,20) keiner mechanischen Belastung ausgesetzt sind, wenn die Schnittstellen (2,5) gegenüber dem Montagerahmen (10) geschwenkt werden.

12. Rangierfeld (1) nach Anspruch 11,
**dadurch gekennzeichne**t, dass
das Führungselement (23) in der Nähe der Hauptrotationsachse (RA) angeordnet ist.

13. Rangierfeld (1) nach einem der Ansprüche 10 bis 12,
**dadurch gekennzeichnet, dass**
der Zugangsport (15) eine Kabelbrücke (19) zum Aufnehmen des Hauptversorgungskabels (16) oder der Leiter des Hauptversorgungskabels (16) auf einer ersten Ebene und zum Führen eines oder mehrerer Patchkabel (20) zum Verbinden eines oder mehrerer der Steckverbinder (3) auf einer zweiten Ebene aufweist.

14. Verteilerrahmen (11) für ein Rechenzentrum, welcher wenigstens ein Rangierfeld (1) einer ersten Bauart gemäß einem der Ansprüche 1 bis 13 aufweist.

15. Verteilerrahmen (11) nach Anspruch 14,
**dadurch gekennzeichnet, dass**
eines der Rangierfelder (1) der ersten Bauart und ein zweites Rangierfeld (1) einer abweichenden Bauart oder der ersten Bauart eine Gruppe von zwei Rangierfeldem (1) bilden, die in demselben Steckplatz in dem Verteilerrahmen (11) angeordnet sind.

## Revendications

1. Panneau de répartition (1) pour un cadre de distribution (11), le panneau de répartition (1) comprenant une interface avant (2) ayant une ou plusieurs insertions pour au moins deux connecteurs optiques (3) agencées dans une rangée avant (4), et une interface arrière (5) ayant une ou plusieurs insertions pour au moins deux connecteurs optiques (3) agencées dans une rangée arrière (6), dans lequel la rangée arrière (6) d'insertions est orientée de manière angulaire par rapport à la rangée avant (4) d'insertions, le panneau de répartition (1) comprenant en outre un cadre principal (9) supportant l'interface avant (2) et l'interface arrière (5), et un cadre de montage (10) pour monter le panneau de répartition (1) sur le cadre de distribution (11),
**caractérisé en ce que**
le cadre principal (9) peut pivoter par rapport au cadre de montage (10) autour d'un axe de rotation principal (RA).

2. Panneau de répartition (1) selon la revendication 1,
**caractérisé en ce que**
au moins deux connecteurs optiques (3) sont insérés dans les une ou plusieurs insertions de l'interface avant (2) et/ou au moins deux connecteurs optiques (3) sont insérés dans les une ou plusieurs insertions de l'interface arrière (5).

3. Panneau de répartition (1) selon la revendication 1 ou 2,
**caractérisé en ce que**
l'interface arrière (5) est reliée à l'interface avant (2) par l'intermédiaire d'une première section latérale (7) et d'une seconde section latérale (8), dans lequel la première section latérale (7) est plus longue que la seconde section latérale (8), la différence de longueur des deux sections latérales (7, 8) dépendant de l'angle (a) entre l'interface avant (2) et l'interface arrière (5).

4. Panneau de répartition (1) selon l'une quelconque des revendications 1 à 3, **caractérisé en ce que**
l'interface arrière (5) est plus longue que l'interface avant (2).

5. Panneau de répartition (1) selon l'une quelconque des revendications 1 à 4, **caractérisé en ce que**
le cadre principal (9) est constitué de deux parties (9a, 9b), dans lequel une première partie (9a) du cadre principal (9) supporte l'interface avant (2), et dans lequel une seconde partie (9b) du cadre principal (9) supporte l'interface arrière (5), dans lequel la première partie (9a) du cadre principal (9) peut pivoter par rapport à la seconde partie (9b) du cadre principal (9) ou s'étendre à partir de celle-ci.

6. Panneau de répartition (1) selon l'une quelconque des revendications 1 à 5, **caractérisé en ce que**
la rangée arrière (6) a ou peut recevoir au moins autant de connecteurs (3) que la rangée avant (4), de préférence plus de connecteurs (3) que la rangée avant (4).

7. Panneau de répartition (1) selon l'une quelconque des revendications 2 à 6, **caractérisé en ce que**
au moins deux des connecteurs (3) de l'interface avant (2) et/ou de l'interface arrière (5) sont agencés dans une cassette commune (13), dans lequel l'interface avant (2) et/ou l'interface arrière (5) présente de préférence une ou plusieurs fentes pour l'insertion d'une ou plusieurs des cassettes (13).

8. Panneau de répartition (1) selon la revendication 7,
**caractérisé en ce que**
au moins deux des cassettes (13) sont disposées l'une à côté de l'autre dans la rangée respective (4, 6).

9. Panneau de répartition (1) selon l'une quelconque des revendications 1 à 8, **caractérisé en ce que**
les connecteurs (3) de l'interface avant (2) et/ou de l'interface arrière (5) peuvent être agencés en un ou plusieurs niveaux, de préférence en deux, trois ou quatre niveaux.

10. Panneau de répartition (1) selon l'une quelconque des revendications 1 à 9, **caractérisé en ce que**
le panneau de répartition (1) comprend un orifice d'accès (15) pour un ou plusieurs câbles de jonction (16) du cadre de distribution (11) ou pour de multiples conducteurs des un ou plusieurs câbles de jonction (16).

11. Panneau de répartition (1) selon la revendication 10,
**caractérisé en ce que**
le panneau de répartition (1) comprend au moins un élément de guidage (23) pour diriger un ou plusieurs câbles, de préférence les câbles de jonction (16), les conducteurs des câbles de jonction (16) et/ou les câbles de répartition (20), par rapport à l'axe de rotation principal (RA) du cadre principal (9) de telle sorte que les câbles (16, 20) ne soient pas soumis à une charge mécanique lorsque les interfaces (2, 5) sont pivotées depuis le cadre de montage (10).

12. Panneau de répartition (1) selon la revendication 11,
**caractérisé en ce que**
l'élément de guidage (23) est situé à proximité de l'axe de rotation principal (RA).

13. Panneau de répartition (1) selon l'une des revendications 10 à 12,
**caractérisé en ce que**
le port d'accès (15) comprend un couvre-câble (19) pour recevoir le câble de jonction (16) ou les conducteurs du câble de jonction (16) à un premier niveau et pour guider un ou plusieurs câbles de répartition (20) pour connecter un ou plusieurs des connecteurs (3) à un second niveau.

14. Cadre de distribution (11) pour un centre de données, comprenant au moins un panneau de répartition (1) d'un premier type selon l'une des revendications 1 à 13.

15. Cadre de distribution (11) selon la revendication 14,
**caractérisé en ce que**
l'un des panneaux de répartition (1) du premier type et un second panneau de répartition (1) d'un type différent ou du premier type forment un groupe de deux panneaux de répartition (1) qui sont agencés dans la même fente dans le cadre de distribution (11).
